# EUROPÄISCHE PATENTSCHRIFT

(11) **EP 2 338 735 B1**
(45) Veröffentlichungstag und Bekanntmachung des Hinweises auf die Patenterteilung: **16.03.2016**
(21) Anmeldenummer: 10193429.7
(22) Anmeldetag: 02.12.2010
(51) Int. Cl.: B60Q 11/00, H05B 33/08

(54) **Lichtmodul für eine Beleuchtungseinrichtung eines Kraftfahrzeugs sowie Beleuchtungseinrichtung eines Kraftfahrzeugs mit einem solchen Lichtmodul**
Light module for a lighting device of a motor vehicle and lighting device of a motor vehicle with such a light module
Module d'éclairage pour un dispositif d'éclairage d'un véhicule automobile et dispositif d'éclairage d'un véhicule automobile doté d'un tel module d'éclairage

(30) Priorität: 22.12.2009 DE 102009060791
(43) Veröffentlichungstag der Anmeldung: 29.06.2011
(73) Patentinhaber: Automotive Lighting Reutlingen GmbH, 72762 Reutlingen (DE)
(72) Erfinder: Schnerr, Michael, 70565 Stuttgart (DE); Blum, Dirk, 72076 Tübingen (DE)
(74) Vertreter: DREISS Patentanwälte PartG mbB

(56) Entgegenhaltungen:
- WO-A2-2009/138907
- DE-A1-102009 017 989
- US-A- 6 153 980
- US-A1- 2007 159 750
- US-A1- 2009 013 570

## Beschreibung

Die vorliegende Erfindung betrifft ein Lichtmodul für eine Beleuchtungseinrichtung eines Kraftfahrzeugs. Das Lichtmodul umfasst mehrere in Reihe geschaltete Halbleiterlichtquellen. Die Erfindung betrifft außerdem eine Beleuchtungseinrichtung eines Kraftfahrzeugs, die mindestens ein Lichtmodul zur Erzeugung einer vorgegebenen Lichtverteilung umfasst.

Lichtmodule und Beleuchtungseinrichtungen der eingangs genannten Art sind in unterschiedlichen Ausführungsformen aus dem Stand der Technik bekannt. Als Halbleiterlichtquellen werden üblicherweise Leuchtdioden (LEDs) eingesetzt. Derartige Beleuchtungseinrichtungen können als eine beliebige Kraftfahrzeugleuchte, insbesondere zur Anordnung am Heck oder an einer Seite eines Kraftfahrzeugs, ausgebildet sein. Ebenso können die Beleuchtungseinrichtungen jedoch auch als LED-Scheinwerfer ausgebildet sein, wobei dann vorzugsweise Hochleistungs-LEDs als Halbleiterlichtquellen zum Einsatz kommen, die weißes oder weißliches Licht in ausreichender Lichtstärke zur Verfügung stellen, damit die LED-Scheinwerfer beliebige Lichtfunktionen, beispielsweise Abblendlicht-, Fernlicht-, Nebellicht-, statisches oder dynamisches Kurvenlicht-, Stadtlicht-, Landstraßenlicht-, Autobahnlicht- oder beliebig andere statische oder adaptive Lichtverteilungen, erzeugen können.

Um eine gewünschte Lichtverteilung erzeugen zu können, werden üblicherweise mehrere in Reihe geschaltete Leuchtdioden eingesetzt. Dabei besteht das Problem, dass, falls eine der Leuchtdioden defekt ist, nicht nur die defekte Leuchtdiode kein Licht mehr aussendet, sondern der gesamte Zweig der in Reihe geschalteten Leuchtdioden nicht mehr funktioniert. Der Grund ist darin zu sehen, dass durch die defekte Leuchtdiode der Stromfluss durch den Zweig und damit durch die in Reihe geschalteten Leuchtdioden unterbrochen ist. Dies ist nachteilig und insbesondere bei Beleuchtungseinrichtungen für Kraftfahrzeuge problematisch, vor allem im Hinblick auf die Verkehrssicherheit.

Ein gattungsgemäßes Lichtmodul ist aus WO 2009/138907 bekannt.

Ausgehend von dem beschriebenen Stand der Technik liegt der vorliegenden Erfindung deshalb die Aufgabe zugrunde, ein Lichtmodul der eingangs genannten Art dahingehend auszugestalten und weiterzubilden, dass ein Defekt einer Halbleiterlichtquelle als Teil einer Reihenschaltung mehrerer Halbleiterlichtquellen nicht gleich zum Ausfall des gesamten Zweigs führt, sondern dass möglichst viele der noch funktionsfähigen Halbleiterlichtquellen des Zweigs trotz des Defekts einer oder mehrerer Halbleiterlichtquellen weiter Licht aussenden.

Zur Lösung dieser Aufgabe wird ausgehend von dem Lichtmodul der eingangs genannten Art vorgeschlagen, ein Lichtmodul mit den Merkmalen des Anspruchs 1 auszugestalten.

Die parallel zu mindestens einer Halbleiterlichtquelle geschaltete Schaltungsanordnung bildet ein Bypass-Element, das den Strom bei Ausfall einer oder mehrerer Halbleiterlichtquellen im Falle eines Fehlers mit Unterbrechung der Verbindung an der mindestens einen defekten Halbleiterlichtquelle vorbei leitet und diese so überbrückt. Dadurch ist es möglich, dass die restlichen nicht überbrückten Halbleiterlichtquellen der Reihenschaltung weiterhin mit Strom versorgt werden und Licht emittieren können. Durch die Verwendung der vorgeschlagenen, parallel zu den Halbleiterlichtquellen angeordneten Schaltungsanordnungen kann die Lichtfunktion des Lichtmoduls mit geringen Einschränkungen weiter betrieben werden. Vorzugsweise ist das Lichtmodul sogar so ausgelegt, dass die von dem Lichtmodul erzeugte Lichtverteilung selbst dann noch die geltenden gesetzlichen Anforderungen erfüllt, wenn eine oder gar mehrere Halbleiterlichtquellen defekt oder ausgefallen sind. In einem solchen Fall muss selbst bei einer oder mehreren defekten Halbleiterlichtquellen das Lichtmodul nicht getauscht werden.

Das erfindungsgemäße Lichtmodul für eine Beleuchtungseinrichtung eines Kraftfahrzeugs bietet einen erheblichen Sicherheitsgewinn, da bei einem Ausfall einer oder mehrerer Halbleiterlichtquellen einer Reihenschaltung mehrerer Halbleiterlichtquellen die noch funktionsfähigen Halbleiterlichtquellen weiterhin Licht aussenden und die Lichtfunktion des Lichtmoduls erzeugen können. Ein Ausfall der kompletten Reihenschaltung wird also verhindert. Dies ist insbesondere für den Einsatz in einer Beleuchtungseinrichtung eines Kraftfahrzeugs von Bedeutung, da dort der Ausfall einer Lichtfunktion, beispielsweise des Abblendlichts, des Bremslichts, des Rücklichts oder eines Blinklichts zu erheblichen Sicherheitsdefiziten führen würde.

Die Ausgestaltung der Erfindung, dass trotz einer oder mehrerer ausgefallener Halbleiterlichtquellen eine eingeschränkte Lichtverteilung erzeugt wird, die trotzdem noch die Erzeugung einer Lichtverteilung durch das Lichtmodul ermöglicht, welche die geltenden gesetzlichen Anforderungen erfüllt, macht eine besondere Auslegung des Lichtmoduls hinsichtlich der Anordnung und Nutzung der Halbleiterlichtquellen erforderlich.

Das parallel zu einer Halbleiterlichtquelle angeordnete Bypass-Element detektiert einen Ausfall oder eine Fehlfunktion einer oder mehrerer der zugeordneten Halbleiterlichtquellen. Dabei erfolgt die Detektion vorzugsweise direkt in unmittelbarer Nähe zu der Halbleiterlichtquelle bzw. auf einem Trägerelement eines LED-Chips. Die Überbrückung einer defekten Halbleiterlichtquelle erfolgt automatisch. Es ist denkbar, dass ein detektierter Ausfall oder eine Fehlfunktion einer Halbleiterlichtquelle nicht nur zur Aktivierung der Überbrückung der Halbleiterlichtquelle genutzt wird, sondern auch für einen Fehlereintrag in einem Fehlerspeicher des Steuergeräts. Es kann also ein Fehlerprotokoll mit Kennung und Ausfallzeitpunkt der defekten Lichtquelle sowie wahlweise mit weiteren Informationen bezüglich des Defekts erstellt und abgespeichert werden. Beim nächsten Werkstattaufenthalt könnte der Fehlerspeicher dann ausgelesen und der Defekt oder die Fehlfunktion der Lichtquelle erkannt werden, obwohl das Lichtmodul nach wie vor eine den gesetzlichen Anforderungen entsprechende Lichtverteilung erzeugt.

Die aufgrund der mindestens einen defekten Halbleiterlichtquelle von dem Lichtmodul erzeugte eingeschränkte Lichtverteilung erfüllt vorzugsweise noch alle gesetzlichen Anforderungen. Alternativ ist es denkbar, dass die eingeschränkte Lichtverteilung die gesetzlichen Anforderungen nicht mehr ganz erfüllt, weil beispielsweise bestimmte Bereiche der Lichtverteilung nicht mehr mit der geforderten Mindestbeleuchtungsstärke ausgeleuchtet werden. Dennoch ermöglicht die eingeschränkte Lichtfunktion selbst in diesen Fällen noch einen zuverlässigen Notbetrieb des Kraftfahrzeugs, insbesondere ohne Defizite bei der Sicherheit. Schließlich erlaubt die Erfindung eine einfache Reihenschaltung von Halbleiterlichtquellen kombiniert mit den Vorteilen einer Parallelschaltung.

Die Mittel zur Detektion einer Fehlfunktion der mindestens einen Halbleiterlichtquelle umfassen Sensoren zum Erfassen der Temperatur und sind bevorzugt in baulicher Einheit mit der mindestens einen Halbleiterlichtquelle ausgebildet. Bei einer großen Anzahl von Halbleiterlichtquellen in dem erfindungsgemäßen Lichtmodul ist es denkbar, dass die Schaltungsanordnung in einer Parallelschaltung nicht nur mit einer Halbleiterlichtquelle, sondern mit mehreren Halbleiterlichtquellen geschaltet ist. Die Schaltungsanordnung würde dann eine Fehlfunktion von einer oder mehreren der parallel geschalteten Halbleiterlichtquellen detektieren und im Falle einer Fehlfunktion einer oder mehrerer der parallel geschalteten Halbleiterlichtquellen diese und unter Umständen noch weitere eigentlich funktionsfähige Halbleiterlichtquellen überbrücken. In einem solchen Fall würden dann mehrere überbrückte Halbleiterlichtquellen kein Licht mehr aussenden. Wenn aber die Anzahl die Halbleiterlichtquellen in dem Lichtmodul relativ groß ist, könnte mit den übrigen, nicht überbrückten Halbleiterlichtquellen nach wie vor noch die gewünschte bzw. eine geringfügig eingeschränkte Lichtverteilung des Lichtmoduls erzeugt werden.

Das parallel zu der mindestens einen Halbleiterlichtquelle geschaltete Bypass-Element übernimmt den durch die Halbleiterlichtquelle fließenden Strom im Falle einer Fehlfunktion einer oder mehrerer zugeordneter Halbleiterlichtquellen. Bei korrekter Funktion der Halbleiterlichtquellen erzeugt das Bypass-Element keine nennenswerte Verlustleistung. Die Detektion eines Ausfalls oder einer Fehlfunktion einer Halbleiterlichtquelle erfolgt durch die Detektion einer Änderung der Betriebstemperatur der Halbleiterlichtquelle (thermische Detektion).

Ein bevorzugtes Ausführungsbeispiel der vorliegenden Erfindung wird nachfolgend anhand der Figuren näher erläutert. Dabei sind gleiche Bauteile und Komponenten mit den gleichen Bezugszeichen bezeichnet. Die Bauteile und Komponenten haben die angegebenen Merkmale und Vorteile auch ohne dass sie die übrigen Bauteile und Komponenten des dargestellten Ausführungsbeispiels aufweisen. Es zeigen:
- Figur 1: eine erfindungsgemäße Beleuchtungseinrichtung gemäß einer bevorzugten Ausführungsform; und
- Figur 2: einen Ausschnitt eines erfindungsgemäßen Lichtmoduls der Beleuchtungseinrichtung aus Figur 1, wobei die Schaltungsanordnungen 12a und 12b nicht Bestandteil der vorliegenden Erfindung sind.

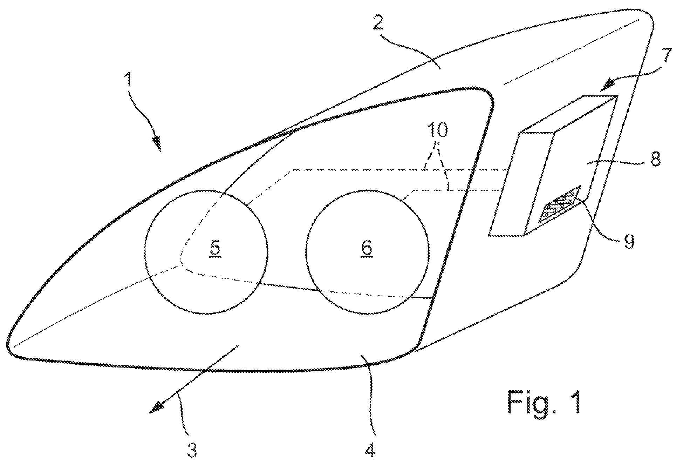

In Figur 1 ist eine erfindungsgemäße Beleuchtungseinrichtung für Kraftfahrzeuge in ihrer Gesamtheit mit den Bezugszeichen 1 bezeichnet. Die Beleuchtungseinrichtung 1 ist in dem dargestellten Ausführungsbeispiel als ein Kraftfahrzeugscheinwerfer ausgebildet. Selbstverständlich kann die Beleuchtungseinrichtung 1 auch als eine Leuchte oder ähnliches, die am Heck oder seitlich am Kraftfahrzeug angeordnet ist, ausgebildet sein. Der Scheinwerfer 1 umfasst ein Gehäuse 2, das vorzugsweise aus Kunststoff gefertigt ist. In einer Lichtaustrittsrichtung 3 weist das Scheinwerfergehäuse 2 eine Lichtaustrittsöffnung auf, die durch eine transparente Abdeckscheibe 4 verschlossen ist. Die Abdeckscheibe 4 ist aus farblosem Kunststoff oder Glas gefertigt. Die Scheibe 4 kann ohne optisch wirksame Profile (zum Beispiel Prismen) als sogenannte klare Scheibe ausgebildet sein. Alternativ kann die Scheibe 4 zumindest bereichsweise mit optisch wirksamen Profilen, die insbesondere eine Streuung des hindurch tretenden Lichts in horizontaler Richtung bewirken, versehen sein.

Im Inneren des Scheinwerfergehäuses 2 sind in dem dargestellten Ausführungsbeispiel zwei Lichtmodule 5, 6 angeordnet. Die Lichtmodule 5, 6 sind fest oder relativ zu dem Gehäuse 2 bewegbar angeordnet. Durch eine Relativbewegung der Lichtmodule 5, 6 zum Gehäuse 2 in horizontaler Richtung kann beispielsweise eine dynamische Kurvenlichtfunktion realisiert werden. Bei einer Bewegung der Lichtmodule 5, 6 um eine horizontale Achse, also in vertikaler Richtung, kann eine Leuchtweitenregelung realisiert werden. Die Lichtmodule 5, 6 sind zur Erzeugung einer gewünschten Lichtverteilung, beispielsweise einer Abblendlicht-, einer Fernlicht-, einer Stadtlicht-, einer Landstraßenlicht-, einer Autobahnlicht-, einer Nebellicht-, einer statischen oder dynamischen Kurvenlicht- oder einer beliebig anderen statischen oder adaptiven Lichtverteilung ausgebildet. Die Lichtmodule 5, 6 erzeugen die gewünschte Lichtfunktion entweder alleine oder in Kombination miteinander, indem die von jedem einzelnen Lichtmodul 5; 6 gelieferten Teillichtverteilungen zu der gewünschten Gesamtlichtverteilung überlagert werden. Die Lichtmodule 5, 6 können als Reflexionsmodule und/oder als Projektionsmodule ausgebildet sein. Selbstverständlich können in dem Scheinwerfergehäuse 2 auch mehr oder weniger als die dargestellten zwei Lichtmodule 5, 6 vorgesehen sein.

An der Außenseite des Scheinwerfergehäuses 2 ist ein Steuergerät 7 in einem Steuergerätegehäuse 8 angeordnet. Selbstverständlich kann das Steuergerät 7 auch an einer beliebig anderen Stelle des Scheinwerfers 1 angeordnet sein. Insbesondere kann für jedes der Lichtmodule 5, 6 ein eigenes Steuergerät vorgesehen sein, wobei die Steuergeräte integraler Bestandteil der Lichtmodule 5, 6 sein können. Das Steuergerät 7 dient zur Steuerung und/oder Regelung der Lichtmodule 5, 6 bzw. von Teilkomponenten der Lichtmodule 5, 6, wie beispielsweise von Lichtquellen der Lichtmodule 5, 6. Die Ansteuerung der Lichtmodule 5, 6 bzw. der Teilkomponenten durch das Steuergerät 7 erfolgt über Verbindungsleitungen 10, die in Figur 1 durch eine gestrichelte Linie lediglich symbolisch dargestellt sind. Über die Leitungen 10 kann auch eine Versorgung der Lichtmodule 5, 6 mit elektrischer Energie erfolgen. Die Leitungen 10 sind durch eine Öffnung im Scheinwerfergehäuse 2 in das Steuergerätegehäuse 8 geführt und dort an die Schaltung des Steuergerätes 7 angeschlossen. Falls mehrere Steuergeräte als integraler Bestandteil der Lichtmodule 5, 6 vorgesehen sind, können die Leitungen 10 und kann die Öffnung in Scheinwerfergehäuse 2 entfallen.

Zur besseren EMV-Abschirmung besteht das Steuergerätegehäuse 8 aus einem elektrisch leitfähigen Material, insbesondere aus Metall, vorzugsweise aus Aluminium-Druckguss. Ebenfalls zur besseren EMV-Abschirmung sind die Leitungen 10 abgeschirmt, insbesondere mittels eines die Leitungen 10 umgebenden Metallgeflechts oder eines Metall-Kunststoff-Geflechts. In dem Steuergerätegehäuse 8 ist des Weiteren eine Öffnung vorgesehen, in der ein Stecker-/Buchsenelement 9 angeordnet ist. Über das Stecker-/ Buchsenelement 9 kann das Steuergerät 7 mit einem übergeordneten Steuergerät (zum Beispiel einen sogenannten Body-Controller) und/oder einer Energieversorgung des Kraftfahrzeugs (zum Beispiel einer Fahrzeugbatterie) verbunden sein.

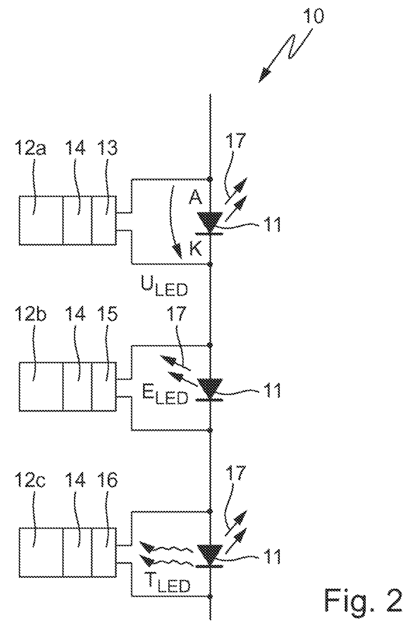

Die Lichtmodule 5, 6 der Beleuchtungseinrichtung 1 nutzen als Lichtquellen eine oder mehrere Halbleiterlichtquellen, insbesondere Leuchtdioden (LEDs). In Zukunft werden LED-Scheinwerfer 1 verstärkt Einsatz finden, die eine Vielzahl von LEDs aufweisen, die mehrdimensional im Scheinwerfergehäuse 2 angeordnet sind. Durch Aus- und Einschalten einzelner LEDs oder einzelner LED-Gruppen können variable Lichtverteilungen erzielt werden. Derartige Scheinwerfer 1 werden als Pixel- oder Matrixscheinwerfer bezeichnet. Üblicherweise sind jeweils mehrere LEDs in einer Reihenschaltung (auch Zweig oder Kette) geschaltet. Um zu verhindern, dass bei einem Defekt oder einer Fehlfunktion einer der in Reihe geschalteten LEDs die gesamte LED-Kette ausfällt, wenn die defekte LED mit einem Fehler "Unterbrechung der Verbindung" ausfällt, wird eine besondere Ausgestaltung der Lichtmodule 5, 6 vorgeschlagen, wie sie anhand der Figur 2 nachfolgend näher erläutert wird.

Figur 2 zeigt eine Reihenschaltung 10 mehrerer Leuchtdioden 11. Selbstverständlich kann die Reihenschaltung 10 auch mehr oder weniger als die dargestellten drei Leuchtdioden 11 umfassen. In Beleuchtungseinrichtungen mit mehreren Halbleiterlichtquellen, insbesondere in LED-Scheinwerfern 1, sind üblicherweise mehrere solcher Reihenschaltungen 10 vorgesehen, um eine gewünschte Lichtverteilung des Lichtmoduls 5; 6 zu erzeugen. Bei dem in Figur 2 gezeigten Ausführungsbeispiel ist parallel zu jeder der Leuchtdioden 11 eine Schaltungsanordnung 12a, 12b, 12c geschaltet. Selbstverständlich ist es auch möglich, dass eine oder mehrere der Schaltungsanordnungen 12a, 12b, 12c parallel zu mehreren LEDs 11 geschaltet sind.

Die Schaltungsanordnungen 12a und 12b sind aber nicht Bestandteil der vorliegenden Erfindung.

Jede der Schaltungsanordnungen 12a, 12b, 12c umfasst Mittel zur Detektion einer Fehlfunktion der ihr zugeordneten Leuchtdiode 11 sowie Mittel zur Überbrückung der Leuchtdiode 11 im Falle einer detektierten Fehlfunktion der überwachten Leuchtdiode 11. Im Falle eines detektierten Fehlers einer der LEDs 11 wird die defekte LED 11 durch Mittel zur Überbrückung der Leuchtdiode 11 überbrückt. Falls also eine der Leuchtdioden 11 mit einem Fehler "Unterbrechung der Verbindung" ausfällt, kann der Strom über die der LED 11 zugeordnete Schaltungsanordnung 12a; 12b; 12c an der defekten Leuchtdiode 11 vorbei fließen, so dass die übrigen Leuchtdioden 11 der LED-Kette 10 nach wie vor mit Strom versorgt werden und Licht aussenden können. Auf diese Weise kann die Lichtfunktion des Lichtmoduls 5; 6 zumindest in eingeschränkter Weise aufrecht erhalten werden, was einen erheblichen Sicherheitsgewinn gegenüber herkömmlichen LED-Beleuchtungseinrichtungen darstellt, wo beim Ausfall einer LED 11 einer LED-Kette 10 alle LEDs 11 der LED-Kette 10 ausfielen.

Bei dem Ausführungsbeispiel aus Figur 2 ist eine Schaltungsanordnung 12a; 12b; 12c jeweils einer Leuchtdiode 11 zugeordnet. Selbstverständlich wäre es auch denkbar, dass eine Schaltungsanordnung 12a; 12b; 12c jeweils mehreren LEDs 11 zugeordnet ist. Im Falle eines Fehlers einer der LEDs 11 würde die Schaltungsanordnung 12a; 12b; 12c in diesem Fall dann zwar mehrer LEDs 11 überbrücken. Falls jedoch die Gesamtzahl der Leuchtdioden 11 des Lichtmoduls 5; 6 groß genug ist, könnte selbst dann noch die Lichtfunktion des Lichtmoduls 5, 6 in eingeschränkter Weise aufrecht erhalten werden.

Besonders bevorzugt ist, wenn die eingeschränkte Lichtfunktion des Lichtmoduls 5, 6 trotz des Ausfalls einer oder mehrerer LEDs 11 noch die gesetzlichen Anforderungen an die resultierende Lichtverteilung erfüllt. Dies erfordert eine besondere Auslegung der Anzahl, Anordnung und Nutzung der LEDs 11 des Lichtmoduls 5; 6. Zur Erfüllung der gesetzlichen Anforderungen trotz Ausfall einer oder mehrerer der LEDs 11 ist es auch denkbar, dass zusätzliche Vorkehrungen getroffen werden. So ist es bspw. denkbar, dass das Lichtmodul 5; 6 beim Ausfall einer oder mehrerer LEDs 11 horizontal und/oder vertikal verschwenkt wird, damit der Ausfall der LED bzw. der LEDs 11 kompensiert werden kann. Ebenso wäre es denkbar, die Stellung einer bewegbaren Blendenanordnung eines Projektionsmoduls zu verändern, um den Ausfall der LED bzw. der LEDs 11 zu kompensieren. Dabei werden also die in dem Lichtmodul 5; 6 sowieso vorgesehenen Komponenten zur Erzeugung eines dynamischen Kurvenlichts, zur Leuchtweitenregelung und/oder zur Erzeugung einer adaptiven Lichtverteilung herangezogen, um beim Ausfall einer oder mehrerer LEDs 11 die resultierende eingeschränkte Lichtverteilung so zu verändern, dass die geltenden gesetzlichen Anforderungen an die Lichtverteilung noch erfüllt werden.

Die in Figur 2 gezeigten Schaltungsanordnungen 12a, 12b, 12c unterscheiden sich voneinander in der Art und Weise und den eingesetzten Mitteln zur Detektion einer Fehlfunktion der zugeordneten Leuchtdioden 11. Die Schaltungsanordnung 12a umfasst beispielsweise eine Spannungsmessvorrichtung 13, welche die an der LED 11 zwischen Anode A und Kathode K anliegende Spannung U_{LED} überwacht. Außerdem verfügt die Schaltungsanordnung 12a über eine Verarbeitungseinheit 14, beispielsweise in Form eines programmierbaren Mikroprozessors, welche die beobachtete Spannung U_{LED} auswertet und gegebenenfalls das Generieren eines entsprechenden Funktionssignals veranlasst. So sorgt die Verarbeitungseinheit 14 dafür, dass bei einem Überschreiten oder Unterschreiten eines Spannungsgrenzwerts durch einen aktuellen gemessenen Wert der überwachten Spannung U_{LED} oder dass bei einem Überschreiten oder Unterschreiten eines Gradientengrenzwerts durch einen ermittelten aktuellen Gradientengrenzwert des beobachteten Spannungsverlaufs U_{LED} eine Fehlfunktion der Leuchtdiode 11 detektiert wird. Die Spannungs- und Gradientengrenzwerte können im Vorfeld vorgegeben und in einem Speicher abgelegt sein. Alternativ ist es auch denkbar, dass die Grenzwerte während des laufenden Betriebs des Lichtmoduls 5, 6 durch eine Mehrheitsentscheidung über mehrere LEDs 11 des LED-Zweigs 10 oder des Lichtmoduls 5; 6 ermittelt werden. Dabei wird davon ausgegangen, dass die Mehrzahl aller LEDs 11 ordnungsgemäß funktioniert, so dass sie zur Ermittlung geeigneter Spannungs- und Gradientengrenzwerte herangezogen werden können.

Die Mittel zur Überbrückung der Leuchtdiode 11 sind vorzugsweise als ein Halbleiterschaltelement, insbesondere als ein Transistor (nicht dargestellt), ausgebildet, dessen Schalteingang in Abhängigkeit des von der Verarbeitungseinheit 14 der Mittel zur Detektion einer Fehlfunktion der Leuchtdiode 11 generierten Funktionssignals angesteuert wird. Wenn also die Verarbeitungseinheit 14 eine Fehlfunktion oder einen Defekt der Leuchtdiode 11 detektiert, gibt sie ein entsprechendes (Fehl-)Funktionssignal aus, das den Transistor der Schaltungsanordung 12a veranlasst, durchzuschalten, so dass der Strom über die Schaltungsanordnung 12a bzw. den Transistor fließen kann.

In der Schaltungsanordnung 12b wird die ordnungsgemäße Funktion der LED 11 mittels eines optischen Lichtsensors 15 (auch Fotodiode) ermittelt. Der Lichtsensor 15 erfasst und beobachtet die Beleuchtungsstärke E_{LED} des von der Leuchtdiode 11 ausgesandten Lichts 17. Die Verarbeitungseinheit 14 ist derart ausgestaltet bzw. programmiert, dass sie eine Fehlfunktion der Leuchtdiode 11 detektiert, falls ein Beleuchtungsstärkegrenzwert durch einen aktuellen Beleuchtungsstärkewert E_{LED} unterschritten wird oder falls ein Gradientengrenzwert durch einen aktuellen Gradientenwert des Beleuchtungsstärkeverlaufs E_{LED} überschritten oder unterschritten wird. Falls eine Fehlfunktion der Leuchtdiode 11 detektiert wird, veranlasst die Verarbeitungseinheit 14 das Generieren eines entsprechenden (Fehl-)Funktionssignals, das dann in der bereits oben beschriebenen Weise die Mittel zur Überbrückung der Leuchtdiode 11, insbesondere den Transistor, ansteuert. Die Grenzwerte für die Beleuchtungsstärke bzw. den Gradienten der Beleuchtungsstärke können analog zu der oben für die Spannung beschriebenen Weise vorgegeben bzw. ermittelt und ggf. abgespeichert werden.

Bei der Schaltungsanordnung 12c wird erfindungsgemäß die ordnungsgemäße Funktion der Leuchtdiode 11 durch Überwachen einer Temperatur T_{LED} der Leuchtdiode 11 detektiert. Zu diesem Zweck verfügt die Schaltungsanordnung 12c über einen Temperatursensor 16, der die Betriebstemperatur T_{LED} der Leuchtdiode 11 erfasst. Die Verarbeitungseinheit 14 ist derart ausgestaltet bzw. programmiert, dass eine Fehlfunktion der Leuchtdiode 11 detektiert wird, falls ein Temperaturgrenzwert durch einen aktuellen Temperaturwert T_{LED} unterschritten wird oder falls ein Gradientengrenzwert durch den aktuellen Gradientenwert des Temperaturverlaufs T_{LED} überschritten oder unterschritten wird. Im Falle einer Fehlfunktion der Leuchtdiode 11 veranlasst die Verarbeitungseinheit 14 das Generieren eines entsprechenden (Fehl-)Funktionssignals, das dann in der oben beschriebenen Weise die Mittel zur Überbrückung der Leuchtdiode 11 bzw. den Transistor ansteuert. Die Grenzwerte für die Temperatur bzw. den Temperaturgradienten können analog zu der oben für die Spannung beschriebenen Weise vorgegeben bzw. ermittelt und ggf. abgespeichert werden.

Die Sensoren 13, 15, 16 sind vorzugsweise in baulicher Einheit mit der oder den jeweils zugeordneten Halbleiterlichtquellen 11 ausgebildet. Bei der Schaltungsanordnung 12a steigt die Spannung U_{LED} im Falle einer Fehlfunktion der LED stark an. Ein solcher Spannungsanstieg kann durch die Verarbeitungseinheit 14 detektiert werden. Im Falle der Schaltungsanordnung 12b ist die Beleuchtungsstärke E_{LED} bei ordnungsgemäßer Funktion der Leuchtdiode 11 wesentlich größer als bei einer Fehlfunktion der Leuchtdiode 11, wo die LED 11 praktisch kein Licht mehr aussendet. Diese hohen Beleuchtungsstärkewerte E_{LED} können durch die Verarbeitungseinheit 14 detektiert werden. Bei der erfindungsgemäßen Schaltungsanordnung 12c ist die Temperatur T_{LED} einer ordnungsgemäß funktionierenden Leuchtdiode deutlich höher als die einer defekten Leuchtdiode 11. Die Betriebstemperatur einer funktionsfähigen Leuchtdiode liegt oberhalb der Umgebungstemperatur, insbesondere oberhalb von 100°C. Die Temperatur einer defekten Leuchtdiode 11 entspricht in etwa der Umgebungstemperatur, die im Bereich zwischen -30°C (im Winter) und +40°C (im Hochsommer) liegt. Die Verarbeitungseinheit kann auch beim Überschreiten einer Grenztemperatur ansprechen und die Leuchtdiode(n) dadurch vor thermischer Überlastung schützen. Nach Unterschreiten einer etwas niedrigeren zweiten Grenztemperatur (Hysterese-Kennlinie) erfolgt automatisch ein Wiedereinschalten der LED. Ist die Geschwindigkeit der An- bzw. Abschaltung der LED ausreichend hoch, ist der thermische Schutz für das menschliche Auge nicht wahrnehmbar.

Da die Leuchtdiode 11 nach der Inbetriebnahme des Lichtmoduls 5; 6 ausgehend von der Umgebungstemperatur einige Zeit benötigt, um ihre Betriebstemperatur T_{LED} zu erreichen, die ein ordnungsgemäßes Funktionieren der LED 11 signalisiert, ist es empfehlenswert, um eine fehlerhafte Detektion eines Defekts einer LED 11 zu vermeiden, mit der Überwachung der Temperatur der Leuchtdiode 11 erst dann zu beginnen, wenn diese ihre Betriebstemperatur T_{LED} erreicht hat. Dies kann je nach Umgebungstemperatur einige 10 Sekunden oder sogar einige Minuten dauern. Die Wartezeit kann fest vorgegeben oder in Abhängigkeit von der Umgebungstemperatur und/oder der Temperatur zu Beginn einer Betriebsphase des Lichtmoduls 5; 6 ermittelt werden.

Damit während dieser Wartezeit eine defekte Leuchtdiode 11 nicht zu einem Ausfall aller Leuchtdioden 11 des LED-Zweigs 10 führt, da ihre Fehlfunktion während der Wartezeit nicht detektiert wird, kann am Ende einer Betriebsphase des Lichtmoduls 5; 6 ein aktueller Messwert der Detektionsmittel 13; 15; 16 in einem Speicher abgelegt werden. Am Anfang einer nachfolgenden Betriebsphase des Lichtmoduls 5; 6 können die gespeicherten Messwerte aus dem Speicher ausgelesen und den Detektionsmitteln 13; 15; 16 zumindest am Anfang der Betriebsphase während der Wartezeit zur Verfügung gestellt werden. Auf diese Weise ist sichergestellt, dass eine während der vorangegangenen Betriebsphase bereits als Defekt erkannte Leuchtdiode 11 sofort zu Beginn der nachfolgenden Betriebsphase während der Wartezeit als Defekt erkannt wird und entsprechend überbrückt wird.

## Patentansprüche

1. Lichtmodul (5; 6) umfassend mehrere in Reihe geschaltete Halbleiterlichtquellen (11), wobei parallel zu jeweils mindestens einer der Halbleiterlichtquellen (11) eine der mindestens einen Halbleiterlichtquelle (11) zugeordnete Schaltungsanordnung (12c) geschaltet ist, die Mittel (16) zur Detektion einer Fehlfunktion der ihr zugeordneten mindestens einen Halbleiterlichtquelle (11) und Mittel zur Überbrückung der mindestens einen Halbleiterlichtquelle (11) im Falle einer Fehlfunktion der mindestens einen Halbleiterlichtquelle (11) aufweist, wobei das Lichtmodul (5; 6) zum Einsatz in einer Beleuchtungseinrichtung (1) eines Kraftfahrzeugs ausgebildet ist, **dadurch gekennzeichnet, dass** die Mittel (16) zur Detektion einer Fehlfunktion der Halbleiterlichtquelle (11) eine Temperatur (T_{LED}) der Halbleiterlichtquelle (11) überwachen und bei einem Unterschreiten eines Temperaturgrenzwerts durch einen aktuellen Temperaturwert (T_{LED}) einen Ausfall der Halbleiterlichtquelle (11) detektieren.

2. Lichtmodul (5; 6) nach Anspruch 1, **dadurch gekennzeichnet, dass** die Mittel zur Überbrückung der mindestens einen Halbleiterlichtquelle (11) ein Halbleiterschaltelement, insbesondere einen Transistor, aufweisen, dessen Schalteingang in Abhängigkeit von einem von den Mitteln (16) zur Detektion einer Fehlfunktion der mindestens einen Halbleiterlichtquelle (11) generierten Funktionssignal angesteuert ist.

3. Lichtmodul (5; 6) nach Anspruch 1 oder 2, **dadurch gekennzeichnet, dass** die Mittel (16) zur Detektion einer Fehlfunktion der Halbleiterlichtquelle (11) bei einem Überschreiten oder Unterschreiten eines Gradientengrenzwerts durch einen aktuellen Gradientenwert des Temperaturverlaufs (T_{LED}) einen Ausfall der Halbleiterlichtquelle (11) detektieren und ein entsprechendes Funktionssignal generieren.

4. Lichtmodul (5; 6) nach einem der Ansprüche 1 bis 3, **dadurch gekennzeichnet, dass** die Mittel (16) zur Detektion einer Fehlfunktion der Halbleiterlichtquelle (11) nach einer Inbetriebnahme des Lichtmoduls (5; 6) erst nach Ablauf einer vorgebbaren Wartezeit mit der Detektion der Fehlfunktion beginnen.

5. Lichtmodul (5; 6) nach einem der Ansprüche 1 bis 4, **dadurch gekennzeichnet, dass** am Ende einer Betriebsphase des Lichtmoduls (5; 6) die aktuellen Messwerte (T_{LED}) der Mittel (16) zur Detektion einer Fehlfunktion in einem Speicher abgelegt und am Anfang einer neuen Betriebsphase des Lichtmoduls (5; 6) aus dem Speicher geladen und den Mitteln (16) zur Detektion einer Fehlfunktion zur Verfügung gestellt werden.

6. Beleuchtungseinrichtung (1) eines Kraftfahrzeugs, umfassend mindestens ein Lichtmodul (5; 6) zur Erzeugung einer vorgegebenen Lichtverteilung, **dadurch gekennzeichnet, dass** das Lichtmodul (5; 6) nach einem der Ansprüche 1 bis 5 ausgebildet ist.

## Claims

1. Light module (5; 6) comprising several series-connected semiconductor light sources (11), in which a circuit configuration (deleted, 12c) allocated to at least one of the semiconductor light sources (11) is respectively connected in parallel to at least one semiconductor light source (11) that has the means (deleted, 16) of detecting a malfunction of at least one semiconductor light source allocated to it (11) and means of bridging at least one semiconductor light source (11) in the event of a malfunction of at least one semiconductor light source (11), (deleted) in which (deleted) the light module (5; 6) is designed for use in an illumination system (1) of a motor vehicle, **characterised in that** (deleted) the means (16) of detecting a malfunction of the semiconductor light source (11) monitor a temperature (T_{LED}) of the semiconductor light source (11) and detect a failure of the semiconductor light source (11) when it falls below a temperature threshold by a current temperature value (T_{LED}).

2. Light module (5; 6) according to claim 1, **characterised in that** the means for bridging at least one semiconductor light source (11) have a semiconductor switching element, in particular a transistor, the switching input of which is triggered subject to a function signal generated by one of the means (16) of detecting a malfunction of at least one semiconductor light source (11).

3. Light module (5; 6) according to claim 1 or 2, **characterised in that** on exceeding or falling below a gradient threshold value by a current gradient of the temperature curve (T_{LED}), the means (16) of detecting a malfunction of the semiconductor light source (11) detect a failure of the semiconductor light source (11) and generate a corresponding function signal.

4. Light module (5; 6) according to one of the claims 1 to 3, **characterised in that** after the commissioning of the light module (5; 6), the means (16) of detecting a malfunction of the semiconductor light source (11) only starts with the detection of the malfunction after the expiration of a preset waiting time.

5. Light module (5; 6) according to one of the claims 1 to 4, **characterised in that** at the end of an operating phase of the light module (5; 6) the current measured values (T_{LED}) of the means (16) for detecting a malfunction are stored in a memory and at the beginning of a new phase of operation of the light module (5; 6), the values are loaded from the memory and provided to the means (16) for detecting a malfunction.

6. Illumination system (1) of a motor vehicle, comprising at least one light module (5; 6) for generating preset light distribution, **characterised in that** the light module (5; 6) is designed according to one of the claims 1 to 5.

## Revendications

1. Module d'éclairage (5 ; 6) comprenant plusieurs sources de lumière à semi-conducteur (11) montées en série, un agencement de circuit (12c) associé à l'au moins une source de lumière à semi-conducteur (11) étant monté parallèlement à respectivement au moins l'une des sources de lumière à semi-conducteur (11), lequel agencement de circuit présente des moyens (16) pour la détection d'un dysfonctionnement de l'au moins une source de lumière à semi-conducteur (11) qui lui est associée et des moyens pour ponter l'au moins une source de lumière à semi-conducteur (11) en cas de dysfonctionnement de l'au moins une source de lumière à semi-conducteur (11), le module d'éclairage (5 ; 6) étant réalisé pour l'utilisation dans un dispositif d'éclairage (1) d'un véhicule automobile, **caractérisé en ce que** les moyens (16) pour la détection d'un dysfonctionnement de la source de lumière à semi-conducteur (11) surveillent une température (T_{LED}) de la source de lumière à semi-conducteur (11) et détectent une panne de la source de lumière à semi-conducteur (11) en cas de non atteinte d'une valeur limite de température par une valeur de température actuelle (T_{LED}).

2. Module d'éclairage (5 ; 6) selon la revendication 1, **caractérisé en ce que** les moyens pour ponter l'au moins une source de lumière à semi-conducteur (11) présentent un élément de commutation à semi-conducteur, en particulier un transistor, dont l'entrée de commutation est commandée en fonction d'un signal fonctionnel généré par les moyens (16) pour la détection d'un dysfonctionnement de l'au moins une source de lumière à semi-conducteur (11).

3. Module d'éclairage (5 ; 6) selon la revendication 1 ou 2, **caractérisé en ce que** les moyens (16) pour la détection d'un dysfonctionnement de la source de lumière à semi-conducteur (11) détectent en cas de dépassement ou de non atteinte d'une valeur limite de gradient par une valeur de gradient actuelle de la courbe de température (T_{LED}) une panne de la source de lumière à semi-conducteur (11) et génèrent un signal fonctionnel correspondant.

4. Module d'éclairage (5 ; 6) selon l'une quelconque des revendications 1 à 3, **caractérisé en ce que** les moyens (16) pour la détection d'un dysfonctionnement de la source de lumière à semi-conducteur (11) ne démarrent après une mise en service du module d'éclairage (5 ; 6) qu'après l'expiration d'un temps d'attente prescriptible par la détection du dysfonctionnement.

5. Module d'éclairage (5 ; 6) selon l'une quelconque des revendications 1 à 4, **caractérisé en ce que** les valeurs de mesure actuelles (T_{LED}) des moyens (16) pour la détection d'un dysfonctionnement sont enregistrées dans une mémoire à la fin d'une phase de fonctionnement du module d'éclairage (5 ; 6) et chargés depuis la mémoire au début d'une nouvelle phase de fonctionnement du module d'éclairage (5 ; 6) et sont mis à disposition des moyens (16) pour la détection d'un dysfonctionnement.

6. Dispositif d'éclairage (1) d'un véhicule automobile, comprenant au moins un module d'éclairage (5 ; 6) pour la génération d'une diffusion de lumière prescrite, **caractérisé en ce que** le module d'éclairage (5 ; 6) est réalisé selon l'une quelconque des revendications 1 à 5.
